# EUROPÄISCHE PATENTSCHRIFT

(11) **EP 2 506 502 B1**
(45) Veröffentlichungstag und Bekanntmachung des Hinweises auf die Patenterteilung: **23.10.2013**
(21) Anmeldenummer: 11160642.2
(22) Anmeldetag: 31.03.2011
(51) Int. Cl.: H04L 12/46, H04L 12/40, H04L 12/24

(54) **Redundantes Automatisierungssystem**
Redundant automation system
Système d'automatisation redondant

(43) Veröffentlichungstag der Anmeldung: 03.10.2012
(73) Patentinhaber: Siemens Aktiengesellschaft, 80333 München (DE)
(72) Erfinder: Bernhard, Rene, 91052 Erlangen (DE); Vogt, Andreas, Dr., 76297 Stutensee-Büchig (DE)

(56) Entgegenhaltungen:
- WO-A1-2004/042482
- WO-A2-01/45348
- US-A1- 2005 065 669
- US-A1- 2009 225 766

## Beschreibung

Die Erfindung betrifft ein Verfahren zum redundanten Betrieb eines Automatisierungssystems, einem Gateway-Rechner eines Automatisierungssystems und ein Automatisierungssystem.

Ein Automatisierungssystem umfasst üblicherweise einen oder mehrere Anwender-Rechner, zumindest zwei Gateway-Rechner und eine Mehrzahl an Speicherprogrammierbaren Steuerungen (SPS). Die Anwender-Rechner und die Gateway-Rechner sind an ein erstes Bussystem eines ersten Typs angeschlossen. Die Gateway-Rechner sowie die Speicherprogrammierbaren Steuerungen sind demgegenüber an ein zweites Bussystem eines zweiten Typs angeschlossen. Die Bussysteme vom ersten und zweiten Typ nutzen dabei üblicherweise unterschiedliche Protokolle. Über den Gateway-Rechner sind die Speicherprogrammierbaren Steuerungen von dem oder den Anwender-Rechnern steuer- und/oder beobachtbar.

Automatisierungssysteme der oben beschriebenen Art können aufgrund der Vielzahl an Speicherprogrammierbaren Steuerungen und/oder Anwender-Rechnern eine hohe Komplexität aufweisen. Beispielsweise kann ein solches Automatisierungssystem zur Steuerung einer Industrieanlage eingesetzt werden. Von entscheidender Bedeutung ist dabei, dass die Steuerung und/oder Beobachtung der Speicherprogrammierbaren Steuerungen auch beim Ausfall einzelner Komponenten sichergestellt ist. Aus diesem Grund werden Automatisierungssysteme redundant ausgelegt.

Beispielsweise muss beim Ausfall eines Gateway-Rechners die Steuerung und/oder Beobachtung der Speicherprogrammierbaren Steuerungen durch die Anwender-Rechner weiterhin sichergestellt sein. Hierzu kann ein redundanter Gateway-Rechner im Fehlerfall des ursprünglichen Gateway-Rechners aktiviert werden. Die Aktivierung des redundanten Gateway-Rechners erfolgt häufig manuell. Dies hat zur Folge, dass in dem Zeitraum zwischen dem Ausfall des ursprünglichen Gateway-Rechners und der Aktivierung des redundanten Gateway-Rechners eine Steuerung und/oder Beobachtung der Speicherprogrammierbaren Steuerungen nicht möglich ist. Darüber hinaus ist die Umschaltung auf den redundanten Gateway-Rechner in der Regel mit weiterem Konfigurationsaufwand verbunden.

Die Offenlegungsschrift US 2005/0065669 offenbart ein Luftfahrzeugsteuerungssytem, wobei mehrere Anwender-Rechner redundant über zwei Gateways mit verschiedenen Speicherprogrammierbaren Steuerungen verbunden sind.

Es ist Aufgabe der vorliegenden Erfindung, die Verfügbarkeit eines Automatisierungssystems bei einem Ausfall eines Gateway-Rechners zu verbessern. Insbesondere soll eine Redundanz geschaffen werden, welche automatisiert ohne administrative Eingriffe eines Administrators des Automatisierungssystems erfolgen kann.

Diese Aufgaben werden gelöst durch ein Verfahren gemäß den Merkmalen des Patentanspruches 1, einem Gateway-Rechner gemäß den Merkmalen des Patentanspruches 11 und ein Automatisierungssystem gemäß den Merkmalen des Patentanspruches 13. Vorteilhafte Ausgestaltungen sind in den abhängigen Patentansprüchen angegeben.

Die Erfindung schlägt ein Verfahren zum redundanten Betrieb eines Automatisierungssystems vor, das einen oder mehrere Anwender-Rechner, zumindest zwei Gateway-Rechner und eine Mehrzahl an Speicherprogrammierbaren Steuerungen (SPS) umfasst. Die jeweilige Anzahl von Anwender-Rechnern, Gateway-Rechnern und Speicherprogrammierbaren Steuerungen kann prinzipiell beliebig gewählt werden. Typischerweise weisen die Anwender-Rechner, die Gateway-Rechner und die Speicherprogrammierbaren Steuerungen jeweils einen für das Automatisierungssystem eindeutigen Kennzeichner auf. Als Kennzeichner wird üblicherweise die Netzwerkadresse jeweiliger Kommunikationskomponenten der genannten Einheiten verwendet.

Die Anwender-Rechner und die Gateway-Rechner sind an ein erstes Bussystem eines ersten Typs und die Gateway-Rechner sowie die Speicherprogrammierbaren Steuerungen an ein zweites Bussystem eines zweiten Typs angeschlossen. Das erste und das zweite Bussystem sind üblicherweise in unterschiedlicher Technologie realisiert und nutzen zumeist unterschiedliche Kommunikationsprotokolle. Grundsätzlich wäre es auch denkbar, dass das erste und das zweite Bussystem in gleicher Technologie unter Nutzung eines gleichen oder unterschiedlichen Kommunikationsprotokolls gebildet sind. Bevorzugt ist das erste Bussystem dazu ausgebildet, eine Kommunikation basierend auf dem TCP/IP-Protokoll, insbesondere gemäß dem Standard OPC, durchzuführen. Demgegenüber ist vorzugsweise das zweite Bussystem ein proprietärer Anlagenbus, insbesondere ein Feldbus, wie z.B. PROFIBus. Ein auf dem TCP/IP-Protokoll basierendes erstes Bussystem erlaubt es aufgrund seiner Standardisierung herkömmliche Rechnerkomponenten als Anwender-Rechner und Gateway-Rechner einzusetzen. Das proprietäre zweite Bussystem orientiert sich demgegenüber an den in dem Automatisierungssystem eingesetzten Speicherprogrammierbaren Steuerungen und den von diesen verwendeten Protokollen.

In bekannter Weise sind die Speicherprogrammierbaren Steuerungen über einen der Gateway-Rechner von den Anwender-Rechnern steuer- und/oder beobachtbar, wobei durch die Gateway-Rechner eine Protokolltransformation zwischen dem Protokoll des ersten Bussystems und dem Protokoll des zweiten Bussystems vorgenommen wird. Nachdem jeder Gateway-Rechner von mehr als einem Anwender-Rechner für eine Kommunikation zu den speicherprogrammierbaren Steuerungen kontaktiert werden kann, stellen die Gateway-Rechner eine Serverfunktionalität bereit. Demgegenüber haben die Anwender-Rechner die Funktionalität eines Clients.

Zum Aufbau einer Kommunikationsverbindung zwischen den Anwender-Rechnern und einer oder mehreren der Speicherprogrammierbaren Steuerungen kontaktiert der Anwender-Rechner einen virtuellen Gateway-Rechner mit einem virtuellen Kennzeichner für alle Gateway-Rechner des Automatisierungssystems, welcher eine physikalische Kommunikationsverbindung zu einem Ausgewählten der Gateway-Rechner herstellt. Der virtuelle Gateway-Rechner kann bspw. durch einen sogenannten Network Load Balancing (NLB)-Mechanismus bereitgestellt werden. Über diesen Mechanismus wird eine gleichmäßige Lastverteilung zwischen den, den virtuellen Rechner bildenden Gateway-Rechnern sichergestellt. Der NLB-Mechanismus ist durch jeweilige, miteinander kommunizierende Softwarekomponenten auf den Gateway-Rechnern des Automatisierungssystems gebildet, wobei die Software-Komponenten miteinander zur Bereitstellung der Funktionalität kommunizieren. Insbesondere wird hierbei, abhängig von der jeweiligen Last der Gateway-Rechner, festgelegt, welcher der Gateway-Rechner der ausgewählte Gateway-Rechner ist. Aus Sicht des Anmelder-Rechners sind alle Gateway-Rechner unter dem gleichen Kennzeichner, vorzugsweise einer Netzwerkadresse, erreichbar. Dies bedeutet, unabhängig von der tatsächlichen Anzahl der Gateway-Rechner des Automatisierungssystems existiert aus Sicht des Anwender-Rechners lediglich ein einziger Gateway-Rechner. Hierdurch ergeben sich Vorteile der vereinfachten Konfiguration des Anwender-Rechners sowie die Möglichkeit einer automatisierten Redundanzbereitstellung bzgl. der Gateway-Rechner.

In einem nächsten Schritt werden in dem ausgewählten, aktiven Gateway-Rechner für die Kommunikationsverbindung Konfigurationsparameter erzeugt und gespeichert. Diese Konfigurationsparameter werden für die Steuerung und/oder Beobachtung der Speicherprogrammierbaren Steuerungen durch den Anwender-Rechner benötigt und einmalig in dem ausgewählten Gateway-Rechner gespeichert.

Schließlich werden zur Bereitstellung der Redundanz des ausgewählten Gateway-Rechners die Konfigurationsparameter für die Kommunikationsverbindung zwischen dem aktiven Gateway-Rechner und den übrigen Gateway-Rechnern ausgetauscht. Hierdurch kann sichergestellt werden, dass die für eine Steuerung und/oder Beobachtung notwendigen Konfigurationsparameter bereits in sämtlichen anderen Gateway-Rechnern des Automatisierungssystems verfügbar sind, sodass bei einem Ausfall des ausgewählten Gateway-Rechners eine schnelle Umschaltung der Kommunikationsverbindung auf einen anderen Gateway-Rechner ermöglicht wird.

Das Verfahren weist den Vorteil auf, dass aus Sicht des Anwender-Rechners nur ein einziger Gateway-Rechner vorhanden ist, sodass eine spezielle Konfiguration des Anwender-Rechners für die Redundanz nicht erforderlich ist. Da die Konfigurationsparameter zwischen den Gateway-Rechnern ausgetauscht, d.h. abgeglichen, werden, muss der Anwender-Rechner diese nach dem Ausfall des ausgewählten Gateway-Rechners nicht neu anlegen. Aus Sicht des Anwender-Rechners stellt der Ausfall des ausgewählten Gateway-Rechners eine Leitungsunterbrechung des ausgewählten Gateway-Rechners zum ersten System dar. Zur Laufzeit sind aus Sicht des Anwender-Rechners nach dieser "Verbindungsunterbrechung"die Konfigurationsdaten in den anderen Gateway-Rechnern noch vorhanden, obwohl der ausgewählte Gateway-Rechner nicht mehr verfügbar ist. Hierdurch wird im Ergebnis eine transparente Redundanz der Gateway-Funktionalität bereitgestellt.

Die Erfindung schafft weiter einen Gateway-Rechner zum redundanten Betrieb eines Automatisierungssystems der oben beschriebenen Art, der dazu ausgebildet ist, zum Aufbau einer Kommunikationsverbindung zwischen dem Anwender-Rechner und einer oder mehreren der Speicherprogrammierbaren Steuerungen eine Nachricht des Anwender-Rechners an einen virtuellen Gateway-Rechner mit einem virtuellen Kennzeichner für alle Gateway-Rechner des Automatisierungssystems zu verarbeiten, wobei der Gateway-Rechner eine physikalische Kommunikationsverbindung zu einem ausgewählten der Gateway-Rechner herstellt. Er ist weiter dazu ausgebildet, für die Kommunikationsverbindung Konfigurationsparameter zu erzeugen und zu speichern. Schließlich ist der erfindungsgemäße Gateway-Rechner dazu ausgebildet, die Konfigurationsparameter für die Kommunikationsverbindung mit den übrigen Gateway-Rechnern des Automatisierungssystems auszutauschen.

Ein erfindungsgemäßes Automatisierungssystem umfasst zumindest zwei Gateway-Rechner der oben beschriebenen Art.

In einer bevorzugten Ausgestaltung sind von einem Austausch der Konfigurationsdaten auch Änderungen an den Konfigurationsdaten umfasst. Der Austausch der Konfigurationsdaten erfolgt erfindungsgemäß somit dynamisch. Eine Änderung an den Konfigurationsdaten kann bspw. inhaltlicher Art sein. Ebenso kann jedoch auch ein Löschen eines Konfigurationsdatums oder der vollständigen Konfigurationsdaten auf dem ausgewählten Gateway-Rechner zu einem Löschen dieses Konfigurationsdatums oder der -daten auf den anderen Gateway-Rechnern führen.

In einer weiteren zweckmäßigen Ausgestaltung wird bei einem Ausfall des ausgewählten Gateway-Rechners eine neue physikalische Kommunikationsverbindung zwischen dem Anwender-Rechner und einem anderen der Gateway-Rechner als neuer ausgewählter Gateway-Rechner hergestellt. Ein Ausfall des ausgewählten Rechners kann einerseits die tatsächliche Nicht-Verfügbarkeit dieses ausgewählten Gateway-Rechners sein. Unter einem Ausfall ist ebenfalls eine Leitungsunterbrechung von dem ausgewählten Gateway-Rechner zu dem Bussystem bzw. dem Anwender-Rechner zu verstehen. Ein Ausfall kann das Nichtfunktionieren von Hardware- und/oder Software-Komponenten umfassen.

Zweckmäßigerweise erfolgt der Aufbau der neuen physikalischen Kommunikationsverbindung automatisch, wobei für die neue Kommunikationsverbindung die in dem neuen ausgewählten Gateway-Rechner gespeicherten Konfigurationsparameter der ausgefallenen Kommunikationsverbindung verwendet werden. Eine Neuanlage der Konfigurationsdaten durch den Anwender-Rechner ist damit nach dem Ausfall des ausgewählten Gateway-Rechners nicht erforderlich.

In einer weiteren vorteilhaften Ausgestaltung erkennt nach der Umschaltung von dem ausgefallenen ausgewählten Gateway-Rechner auf den neuen ausgewählten Gateway-Rechner der neue ausgewählte Gateway-Rechner die Umschaltung anhand einer an den virtuellen Gateway-Rechner gerichtete und die Kommunikationsverbindung aktivierenden Nachricht des Anwender-Rechners, wobei die Nachricht von dem Anwender-Rechner infolge der unterbrochenen alten Kommunikationsverbindung empfangen wird. Der Anwender-Rechner erkennt nach einer vorgegebenen Überwachungszeit, die von seiner Konfiguration abhängt, dass der (alte) Gateway-Rechner nicht mehr verfügbar ist, also eine Verbindungsunterbrechung besteht. Aufgrund dessen baut der Anwender-Rechner eine neue Kommunikationsverbindung auf, die durch die Mechanismen des virtuellen Gateway-Rechners automatisch zu einem der anderen Gateway-Rechner aufgebaut wird. Derjenige Gateway-Rechner, welcher die Kommunikationsverbindung bereitstellt, ist dann der neue ausgewählte Gateway-Rechner. Anhand der von dem Anwender-Rechner an den virtuellen Gateway-Rechner übertragenen Nachricht erkennt der neue ausgewählte Gateway-Rechner, dass die Kommunikationsverbindung zu den Speicherprogrammierbaren Steuerungen herzustellen ist und kann zu diesem Zweck auf die dynamisch ausgetauschten Konfigurationsdaten zurückgreifen.

In einer alternativen Variante ist der explizite Empfang einer die Kommunikationsverbindung aktivierenden Nachricht des Anwender-Rechners nicht erforderlich. Hier wird der Ausfall des (alten) ausgewählten Gateway-Rechners durch den Abgleich von Verbindungsdaten der Kommunikationsverbindung durch die anderen Gateway-Rechner überwacht. Bei der Detektion des Ausfalls der ausgewählten Gateway-Rechner stellt ein anderer der Gateway-Rechner als neuer ausgewählter Gateway-Rechner die neue Kommunikationsverbindung zu dem Anwender-Rechner automatisch her. Dieser Mechanismus ist als "failover" bekannt.

Um die transparente Redundanz der Gateway-Funktionalität sicherzustellen, ist weiterhin vorgesehen, dass alle Gateway-Rechner in gleicher Weise konfiguriert werden und den gleichen Adressraum bereitstellen und verwalten.

In einer weiteren Ausgestaltung umfassen die Konfigurationsparameter Kontextobjekte, insbesondere für die Steuerung und/oder Beobachtung der Speicherprogrammierbaren Steuerungen, und optional Zertifikate. Kontextobjekte im Sinne der Erfindung sind bspw. Daten sogenannte "Sessions" sowie Daten von sogenannten "Subscriptions". Sessions stellen Verbindungen auf einem der Gateway-Rechner zu den Speicherprogrammierbaren Steuerungen dar. Subscriptions enthalten Informationen über die Art und Weise der Gruppierung und/oder Darstellung von Daten auf dem Anwender-Rechner, bspw. in Abhängigkeit bestimmter Funktionalitäten des Automatisierungssystems dar. Subscriptions können ebenfalls Informationen über die Anmeldung für Dienste umfassen. Als Kontextobjekte können weiterhin sogenannte 3MonitoredItems" berücksichtigt werden. Insbesondere erfolgt hierbei ein dynamischer Austausch von aktivierten Sessions. Demgegenüber kann vorgesehen sein, Subscriptions unabhängig von ihrem Status dynamisch zwischen den Gateway-Rechnern auszutauschen.

Es ist weiterhin bevorzugt, wenn die auf den nicht ausgewählten Gateway-Rechnern gespeicherten Konfigurationsparameter nicht verwendet werden, solange der ausgewählte Gateway-Rechner bestimmungsgemäß arbeitet. Hierdurch werden - unabhängig von der Anzahl der in dem Automatisierungssystem zu Redundanzzwecken vorgesehenen Gateway-Rechnern - eindeutige Kommunikationsbeziehungen in der Kommunikationsverbindung festgelegt.

Es ist weiterhin vorteilhaft, wenn zusätzlich zu den Konfigurationsdaten ein, optional dynamischer, Austausch von Informationen über die an den virtuellen Gateway-Rechner angeschlossenen Speicherprogrammierbaren Steuerungen erfolgt. Auch diese Ausgestaltung trägt dazu bei, eine transparente und quasi verzögerungsfreie Umschaltung im Redundanzfall sicherzustellen.

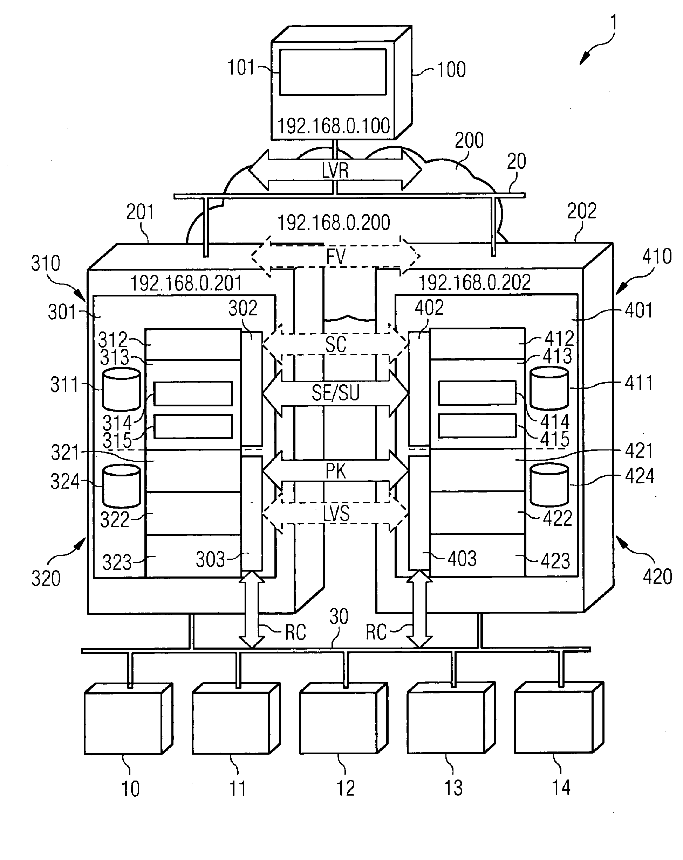

Die Erfindung wird nachfolgend näher anhand eines Ausführungsbeispiels in der Zeichnung erläutert. Die einzige Figur zeigt ein erfindungsgemäßes Automatisierungssystem.

Das Automatisierungssystem 1 umfasst einen Anwender-Rechner 100, einen ersten Gateway-Rechner 201, einen zweiten Gateway-Rechner 202 sowie fünf Speicherprogrammierbare Steuerungen (SPS) 10, 11, 12, 13, 14. Die in dem Ausführungsbeispiel dargestellte Anzahl an Anwender-Rechnern, Gateway-Rechnern und Speicherprogrammierbaren Steuerungen ist willkürlich gewählt. Grundsätzlich kann das erfindungsgemäße Automatisierungssystem eine Mehrzahl an Anwender-Rechnern 100, eine größere Anzahl an Gateway-Rechnern 201, 202 und eine kleinere oder größere Anzahl an Speicherprogrammierbaren Steuerungen 10, 11, 12, 13, 14 umfassen.

Der Anwender-Rechner 100 sowie der erste und der zweite Gateway-Rechner 201, 202 sind an ein erstes Bussystem 20 angeschlossen. Das erste Bussystem 20 ist von einem ersten Typ und basiert bevorzugt auf einem Kommunikationsprotokoll gemäß TCP/IP. Das erste Bussystem kann demgemäß Ethernet-basiert ausgebildet sein. Bevorzugt erfolgt eine Kommunikation auf den für Automatisierungssysteme verwendeten Standard OPC. Der Anwender-Rechner und die Gateway-Rechner können somit als herkömmliche PCs bereitgestellt werden.

Der erste und der zweite Gateway-Rechner 201, 202 sowie die Speicherprogrammierbaren Steuerungen 10, 11, 12, 13, 14 sind an ein zweites Bussystem 30 angeschlossen, welches von einem zweiten Typ ist. Das zweite Bussystem 30 ist bspw. ein proprietärer Anlagenbus, insbesondere ein Feldbus. Das dabei verwendete Protokoll orientiert sich an den von den Speicherprogrammierbaren Steuerungen verwendeten Protokoll. Beispielsweise kann das zweite Bussystem ein PROFIBus sein. Als Protokoll kann bspw. das von der Firma Siemens entwickelte S7-Protokoll verwendet werden, wenn die Speicherprogrammierbaren Steuerungen 10, 11, 12, 13, 14 für eine entsprechende Kommunikation eingerichtet sind.

Die Speicherprogrammierbaren Steuerungen 10, 11, 12, 13, 14 ermöglichen die Steuerung und/oder Überwachung von technischen Komponenten des Automatisierungssystems. Beispielsweise können durch die Speicherprogrammierbaren Steuerungen Drücke, Temperaturen, Drehzahlen, Geschwindigkeiten usw. überwacht bzw. gesteuert werden. Die von den einzelnen Speicherprogrammierbaren Steuerungen 10, 11, 12, 13, 14 bereitgestellten (Mess-)Daten können auf einer Client-Software 101 des Anwender-Rechners 100 zusammen mit Steuerparametern zu Überwachungszwecken für einen Nutzer visualisiert werden. Hierzu ist die Bereitstellung einer Kommunikationsverbindung zwischen dem Anwender-Rechner 100 bzw. dessen Client-Software 101 und den Speicherprogrammierbaren Steuerungen 10, 11, 12, 13, 14 erforderlich. Diese Kommunikationsverbindung wird über einen der Gateway-Rechner 201, 202 hergestellt, wobei der die Kommunikationsverbindung bereitstellende Gateway-Rechner einen aktiven bzw. ausgewählten Gateway-Rechner darstellt.

Auf dem ersten und dem zweiten Gateway-Rechner, die in identischer Weise konfiguriert sind und den gleichen Adressraum bereitstellen, wird mittels einer Server-Software 301 des ersten Gateway-Rechners 201 bzw. einer Server-Software 401 des zweiten Gateway-Rechners 202 darüber hinaus eine Protokollumsetzung von dem Protokoll des ersten Datenbusses 20 in das Protokoll des zweiten Datenbusses 30, und umgekehrt, vorgenommen. Zu diesem Zweck umfasst eine jeweilige Server-Software 301, 401 Software-Komponenten 310, 410, welche dem Protokoll des ersten Bussystems 20 zugeordnet sind, und Software-Komponenten 320, 420, welche dem Protokoll des zweiten Bussystems 30 und der Funktionalität der Speicherprogrammierbaren Steuerungen 10, 11, 12, 13, 14 zugeordnet sind.

Um eine Kommunikation zwischen den Komponenten des Automatisierungssystems 1 sicherstellen zu können, weisen der Anwender-Rechner 100, der erste und der zweite Gateway-Rechner 201, 202 und die Speicherprogrammierbaren Steuerungen 10, 11, 12, 13, 14 jeweils einen eindeutigen Kennzeichner in Form einer Netzwerkadresse auf. Dem Anwender-Rechner 100 ist exemplarisch die Netzwerkadresse 192.168.0.100, dem ersten Gateway-Rechner die Netzwerkadresse 192.168.0.201 und dem zweiten Gateway-Rechner die Netzwerkadresse 192,198.0.202 zugeordnet. Die Speicherprogrammierbaren Steuerungen 10, 11, 12, 13, 14 können IP-Adressen oder andere Adressen aufweisen. Z.B. ist der speicherprogrammierbaren Steuerung 10 die Netzwerkadresse 192.168.1.10, der Speicherprogrammierbaren Steuerung 11 die Netzwerkadresse 192.168.1.11, der Speicherprogrammierbaren Steuerung 12 die Netzwerkadresse 192.168.1.12, der Speicherprogrammierbaren Steuerung 13 die Netzwerkadresse 192.168.1.13 und der Speicherprogrammierbaren Steuerung 14 die Netzwerkadresse 192.168.1.14 zugeordnet.

Die Gateway-Rechner 201, 202 verfügen über einen Mechanismus zum sogenannten Network Load Balancing (NLB). Dieser Mechanismus wird über eine auf jedem der Gateway-Rechner vorhandene Software-Komponente bereitgestellt, welcher eine gleichmäßige Lastverteilung zwischen den Gateway-Rechnern bzgl. der über sie anfallenden Kommunikation sicherstellt (Pfeil LVR). Zu diesem Zweck wird dem Anwender-Rechner 100 - unabhängig von der Anzahl der Gateway-Rechner 201, 202 - ein einziger virtueller Rechner 200 mit einer für alle Gateway-Rechner gemeinsamen Netzwerkadresse 192.168.0.200 vorgespiegelt. NLB ist ein bspw. in dem Server-Betriebssystemen der Firma Microsoft® enthaltener Mechanismus, der für einen Client eine virtuelle IP-Adresse zur Verfügung stellt, hinter der bis zu 32 physikalische Server (hier: Gateway-Rechner) zusammengefasst werden. Beim Aufbau einer neuen Kommunikationsverbindung von dem Anwender-Rechner 100 zwecks Kommunikation mit den Speicherprogrammierbaren Steuerungen werden die Verbindungen gleichmäßig auf die verfügbaren Server bzw. Gateway-Rechner 201, 202 verteilt. Hierdurch ist eine Lastverteilung gewährleistet. Der Mechanismus wird gleichzeitig für eine für den Anwender-Rechner 100 transparente Redundanz genutzt, da für den Anwender-Rechner alle Gateway-Rechner 201, 202 über eine IP-Adresse (die des virtuellen Gateway-Rechners 200) erreichbar sind. Ein positiver Effekt ist, dass für die Bereitstellung der Redundanz im Hinblick auf die physikalisch unterschiedlichen Gateway-Rechner 201, 202 eine spezielle Konfiguration des Anwender-Rechners 100 nicht erforderlich ist.

Der Aufbau einer Kommunikationsverbindung von dem Anwender-Rechner 100 zu den Speicherprogrammierbaren Steuerungen 10, 11, 12, 13, 14 erfolgt somit immer - wie erläutert - über den virtuellen Rechner 200, welcher entscheidet, welcher der Gateway-Rechner 201, 202 die aktive Kommunikationsverbindung zur Verfügung stellen wird. Zunächst wird zur Beschreibung davon ausgegangen, dass der erste Gateway-Rechner 201 den ausgewählten Gateway-Rechner darstellt.

Hierbei werden zunächst in dem ausgewählten, aktiven Gateway-Rechner 201 für die Kommunikationsverbindung Konfigurationsparameter erzeugt und gespeichert. Dies erfolgt durch die Server-Software 301, welche zu diesem Zweck über eine Konfigurationsdatenbank 311 einen Stack 312, ein Server SDK (Software Development Kit) 313, umfassend ein Kontextobjekt 314 über Sessions und ein Kontextobjekt 315 über Subscriptions umfasst. Darüber hinaus sind in dem dem zweiten Bussystem 30 zugeordneten Teil 320 ein sogenannter NodeManager 321, ein sogenannter IOManager 322, eine Protokollanbindung 323 sowie eine Konfigurationsdatenbank 324 enthalten. Mit dem Bezugszeichen 302, 303 sind Redundanzmanagementeinheiten gekennzeichnet, die der Software-Komponente 310 und der Software-Komponente 320 zugeordnet sind. Diese im Ausführungsbeispiel logisch vorgenommene Zuordnung muss in der Praxis nicht in Gestalt zweier separater Redundanzmanagementeinheiten realisiert sein. Es ist ausreichend, wenn pro Server-Software eine einzige Redundanzmanagementeinheit vorgesehen ist.

In entsprechender Weise verfügt der zweite Gateway-Rechner 202 über eine identisch aufgebaute Server-Software 401, wobei gleiche Komponenten bzw. Funktionalitäten mit einer führenden "4" anstelle einer führenden "3" in den Bezugszeichen gekennzeichnet sind.

Die Konfigurationsparameter umfassen insbesondere Kontextobjekte für die Steuerung und/oder Beobachtung der Speicherprogrammierbaren Steuerungen, sowie optional Zertifikate. Die Kontextobjekte enthaltenen Daten von Sessions und Daten von Subscriptions bzw. MonitoredItems. Daten von Sessions werden dabei in dem Kontextobjekt 314, Daten von Subscriptions in dem Kontextobjekt 315 erzeugt bzw. verwaltet. Eine Speicherung kann in der Konfigurationsdatenbank 311 erfolgen. Zur Bereitstellung der Redundanz werden die Konfigurationsparameter dynamisch, d.h. in regelmäßigen Abständen, zwischen den Gateway-Rechnern 201, 202 ausgetauscht. Der Austausch kann bspw. nach jeder Änderung erfolgen. Ebenso ist ein zeitlich periodischer Datenaustausch der Konfigurationsparameter möglich.

Fällt der Gateway-Rechner 201 aus, so erkennt der Anwender-Rechner 100 nach einer konfigurierten Überwachungszeit die Verbindungsunterbrechung zu den Speicherprogrammierbaren Steuerungen 10, 11, 12, 13, 14. Infolgedessen wird durch den Anwender-Rechner 100 eine neue Kommunikationsverbindung erzeugt, die über den virtuellen Gateway-Rechner 200 automatisch über den redundanten Gateway-Rechner 202 aufgebaut wird. Da aufgrund des Austausches der Konfigurationsparameter Sessions und Subscriptions bekannt sind, erhält der Anwender-Rechner 100 direkt nach dem Herstellen der neuen Kommunikationsverbindung Daten (von den speicherprogrammierbaren Steuerungen), ohne dass hierfür das Anlegen neuer Subscriptions erforderlich ist. Bei dieser Vorgehensweise ist zwar während der Umschaltung von dem Gateway-Rechner 201 auf den redundanten Gateway-Rechner 202 keine Aktualisierung von Daten gewährleistet. Da aus Sicht des Anwender-Rechners jedoch ein Verbindungsfehler vorliegt, fällt die Unterbrechung kurz aus. Die Überwachungsreaktionszeit bis zur Erkennung des Ausfalls des ehemals aktiven, ausgewählten Gateway-Rechners beträgt z.B. zehn Sekunden. Davon werden fünf Sekunden bis zur Erkennung des Ausfalls und weitere fünf Sekunden zur Neuverteilung der Last benötigt.

Bei einer Redundanzumschaltung von dem Gateway-Rechner 201 auf den Gateway-Rechner 202 erkennt letzterer die Umschaltung dadurch, dass der Anwender-Rechner 100 aufgrund der ihm erscheinenden Leitungsunterbrechung eine Funktion zur Wiederherstellung der Kommunikationsverbindung aufruft. Mit dem Empfang der entsprechenden Nachricht ist dem Gateway-Rechner 202 bekannt, dass er für alle Konfigurationsdaten (Objekte, die im Kontext einer Session erzeugt wurden (Subscriptions und MonitoredItems)) nunmehr zuständig ist. Hierdurch liest er die entsprechenden Konfigurationsdaten auf seiner Konfigurationsdatenbank 411, 424 aus und aktiviert diese zu den Speicherprogrammierbaren Steuerungen 10, 11, 12, 13, 14 hin. Da die Konfigurationsdaten (Sessions und Subscriptions) abgeglichen werden, braucht der Anwender-Rechner 100 diese nach dem Ausfall des Gateway-Rechners 201 nicht neu anlegen. Wie erläutert, interpretiert der Anwender-Rechner 100 den Ausfall des Gateway-Rechners wie eine Unterbrechung einer Leitung. Aus Sicht des Anwender-Rechners sind die Konfigurationsdaten nach der Verbindungsunterbrechung zur Laufzeit noch vorhanden, auch wenn der ursprüngliche, ausgewählte Gateway-Rechner 201 nicht mehr verfügbar ist.

In einer alternativen Variante werden im Betrieb des Automatisierungssystems 1 zwischen den redundanten Gateway-Rechnern 201, 202 die Kommunikationsverbindung betreffende Daten ausgetauscht. Hierdurch kann eine unterbrechungsfreie Übernahme einer Kommunikationsverbindung von dem Gateway-Rechner 201 auf den Gateway-Rechner 202 sichergestellt werden. Dies ist schematisch durch den Pfeil FV sichergestellt, welcher eine Ausfallsicherung einer Verbindung eines Gateway-Rechners zum ersten Bussystem repräsentiert. Dieser Mechanismus wird auch als "Failover" bezeichnet. Die unterbrechungsfreie Übernahme der Kommunikationsverbindung kann dabei durch das Betriebssystem, das auch den NLB-Mechanismus bereitstellt, gewährleistet werden.

Neben den Sessions und Subscriptions umfassenden Konfigurationsparametern (vgl. Pfeil SE/SU) können auch einen sicheren Kommunikationskanal betreffende Informationen, wie z.B. Schlüssel und Zertifikate, zwischen den Gateway-Rechnern 201, 202 ausgetauscht werden (vgl. Pfeil SC).

Mit den Bezugszeichen SE/SU ist der Austausch der Konfigurationsdaten zwischen den Gateway-Rechnern 201, 202 gekennzeichnet. Die Redundanzmodule 302, 402 sorgen dafür, dass die von dem Anwender-Rechner 100 erzeugten Objekte in dem ausgewählten Gateway-Rechner 201 zwischen den verschiedenen Gateway-Rechnern abgeglichen werden. Hierbei können auch die bereits erwähnten Zertifikate des Anwender-Rechners 100 abgeglichen werden. Wird in dem Gateway-Rechner 201 von dem Anwender-Rechner 100 ein Kontextobjekt 314, 315 (Session, Subscription oder MonitoredItem) angelegt, so wird dieses Kontextobjekt auf den anderen Gateway-Rechner 202 gespiegelt. Die gespiegelten Subscriptions und MonitoredItems in den zu Redundanzwecken vorgesehenen Gateway-Rechner 202 werden allerdings nicht zu den Speicherprogrammierbaren Steuerungen hin aktiv. Die Spiegelung wird insbesondere für sogenannte Data und Event MonitoredItems vorgenommen.

Es werden lediglich aktivierte Sessions abgeglichen. Subscriptions werden unabhängig von ihrem Status abgeglichen. Um dynamische Änderungen berücksichtigen zu können, sind ebenfalls Änderungen an Sessions, Subscriptions oder MonitoredItems vorgesehen. Werden bspw. Sessions oder Subscriptions gelöscht, werden auch die gespiegelten bzw. abgeglichenen korrespondierenden Objekte auf den anderen Gateway-Rechnern 202 gelöscht. Unter einer Session wird eine Kommunikationsverbindung über einen ausgewählten Gateway-Rechner, hier: 201, verstanden. Unter einer Subscription wird die Art und Weise der Datenaufbereitung bzw. -verarbeitung verstanden. Subscriptions umfassen ebenfalls Anmeldungen für bestimmte Dienste.

Ein Abgleich von aktiven Alarmen ist nicht erforderlich, da jeder Gateway-Rechner ein aktuelles Abbild von Alarmen hat. Unter einem Alarm wird eine Meldung von der Speicherprogrammierbaren Steuerung verstanden. Darüber hinaus ist auch ein Abgleich von in den Gateway-Rechnern registrierten Speicherprogrammierbaren Steuerungen 10, 11, 12, 13, 14 vorgesehen.

Es ist vorteilhaft, abgelehnte Zertifikate des Anwender-Rechners 100 abzugleichen. Ein Akzeptieren von Zertifikaten des Anwender-Rechners erfolgt auf sämtlichen Gateway-Rechnern 201, 202 manuell.

Mit PK ist eine Prüfung von Konfigurationsdaten der NodeManager 321, 421 über die Redundanzmanagementeinheiten 303, 403 vorgesehen. Aufgrund des Umstands, dass sämtliche Gateway-Rechner 201, 202 des Automatisierungssystems 1 eine identische Konfiguration aufweisen sollten, dürfte eine Unstimmigkeit nicht auftreten. Im Falle einer auftretenden Unstimmigkeit der Konfigurationen der NodeManager 321, 421 ist ein manuelles Eingreifen eines Nutzers des Automatisierungssystems erforderlich. Durch diesen kann die Topologie des Automatisierungssystems in den Konfigurationsdaten korrekt erstellt werden.

Die beschriebene Topologie sowie die Funktionalitäten zur Bereitstellung der Redundanz ermöglichen auch eine Lastverteilung zu den Speicherprogrammierbren Steuerungen hin. Dies ist durch den Pfeil LVS gekennzeichnet. Hierdurch kann eine Lastverteilung nach tatsächlich auftretenden Datenmengen erfolgen, im Gegensatz zu der Lastverteilung des NLB-Mechanismus, welcher streng eine Gleichverteilung von Anwender-Rechnern auf die vorhandenen Gateway-Rechner vornimmt. Die Lastverteilung wird zwischen den Kommunikationsschichten in den verschiedenen Gateway-Rechnern realisiert.

In der Figur sind mit den Bezugszeichen RC weiterhin Mechanismen für Verfahren "S7 Redconnect" vorgesehen. Diese dienen zur weiteren Erhöhung der Verfügbarkeit der Verbindung zu den Speicherprogrammierbaren Steuerungen. Diese Erhöhung ist optional einsetzbar.

## Patentansprüche

1. Verfahren zum redundanten Betrieb eines Automatisierungssystems (1), das einen oder mehrere Anwender-Rechner (100), zumindest zwei Gateway-Rechner (201, 202) und eine Mehrzahl an Speicherprogrammierbaren Steuerungen (10, 11, 12, 13, 14) umfasst, wobei die Anwender-Rechner (100) und die Gateway-Rechner (201, 202) an ein erstes Bussystem (20) eines ersten Typs und die Gateway-Rechner (201, 202) sowie die Speicherprogramrriierbaren Steuerungen (10, 11, 12, 13, 14) an ein zweites Bussystem (30) eines zweiten Typs angeschlossen sind, wodurch die Speicherprogrammierbaren Steuerungen (10, 11, 12, 13, 14) über einen der Gateway-Rechner (201, 202) von den Anwender-Rechnern (100) steuer- und/oder beobachtbar sind,
**dadurch gekennzeichnet, daß**
- zum Aufbau einer Kommunikationsverbindung zwischen einem der Anwender-Rechner (100) und einer oder mehreren der Speicherprogrammierbaren Steuerungen (10, 11, 12, 13, 14) der Anwender-Rechner (100) einen virtuellen Gateway-Rechner (200) mit einem virtuellen Kennzeichner für alle Gateway-Rechner (201, 202) des Automatisierungssystems (1) kontaktiert, welcher eine physikalische Kommunikationsverbindung zu einem ausgewählten der Gateway-Rechner (201, 202) herstellt;
- in dem ausgewählten, aktiven Gateway-Rechner (201, 202) für die Kommunikationsverbindung Konfigurationsparameter erzeugt und gespeichert werden;
- die Konfigurationsparameter für die Kommunikationsverbindung zwischen dem aktiven Gateway-Rechner (201, 202) und den übrigen Gateway-Rechnern (201, 202) ausgetauscht werden.

2. Verfahren nach Anspruch 1, bei dem von einem Austausch der Konfigurationsdaten Änderungen an den Konfigurationsdaten umfasst sind.

3. Verfahren nach Anspruch 1 oder 2, bei dem bei einem Ausfall des ausgewählten Gateway-Rechners (201, 202) eine neue physikalische Kommunikationsverbindung zwischen dem Anwender-Rechner (100) und einem anderen der Gateway-Rechner (201, 202) als neuer ausgewählter Gateway-Rechner (201, 202) hergestellt wird.

4. Verfahren nach Anspruch 3, bei dem der Aufbau der neuen physikalischen Kommunikationsverbindung automatisch erfolgt, wobei für die neue Kommunikationsverbindung die in dem neuen ausgewählten Gateway-Rechner (201, 202) gespeicherten Konfigurationsparameter der ausgefallenen Kommunikationsverbindung verwendet werden.

5. Verfahren nach Anspruch 3 oder 4, bei dem nach der Umschaltung von dem ausgefallenen ausgewählten Gateway-Rechner (201, 202) auf den neuen ausgewählten Gateway-Rechner (201, 202) der neue ausgewählte Gateway-Rechner (201, 202) die Umschaltung anhand einer an den virtuellen Gateway-Rechner (200) gerichteten und die Kommunikationsverbindung aktivierenden Nachricht des Anwender-Rechners (100) erkennt, die von dem Anwender-Rechner (100) infolge der unterbrochenen alten Kommunikationsverbindung empfangen wird.

6. Verfahren nach einem der Ansprüche 3 bis 4, bei dem der Ausfall des ausgewählten Gateway-Rechners (201, 202) durch den Abgleich von Verbindungsdaten der Kommunikationsverbindung durch die anderen Gateway-Rechner (201, 202) überwacht wird, wobei bei der Detektion des Ausfalls des ausgewählten Gateway-Rechners (201, 202) ein anderer der Gateway-Rechner (201, 202) als neuer ausgewählter Gateway-Rechner (201, 202) die neue Kommunikationsverbindung zu dem Anwender-Rechner (100) automatisch herstellt.

7. Verfahren nach einem der vorhergehenden Ansprüche, bei dem alle Gateway-Rechner (201, 202) in gleicher Weise konfiguriert werden und den gleichen Adressraum bereitstellen und verwalten.

8. Verfahren nach einem der vorhergehenden Ansprüche, bei dem die Konfigurationsparameter Kontextobjekte, insbesondere für die Steuerung und/oder Beobachtung der Speicherprogrammierbaren Steuerungen (10, 11, 12, 13, 14), und optional Zertifikate umfassen.

9. Verfahren nach einem der vorhergehenden Ansprüche, bei dem die auf den nicht ausgewählten Gateway-Rechnern (201, 202) gespeicherten Konfigurationsparameter nicht verwendet werden, solange der ausgewählte Gateway-Rechner (201, 202) bestimmungsgemäß arbeitet.

10. Verfahren nach einem der vorhergehenden Ansprüche, bei dem zusätzlich zu den Konfigurationsdaten ein, optional dynamischer, Austausch von Informationen über die an den virtuellen Gateway-Rechner (201, 202) angeschlossenen Speicherprogrammierbaren Steuerungen (10, 11, 12, 13, 14) erfolgt.

11. Gateway-Rechner (201, 202) zum redundanten Betrieb eines Automatisierungssystems (1), das einen oder mehrere Anwender-Rechner (100), zumindest zwei der Gateway-Rechner (201, 202) und eine Mehrzahl an Speicherprogrammierbaren Steuerungen (10, 11, 12, 13, 14) umfasst, wobei die Anwender-Rechner (100) und die Gateway-Rechner (201, 202) an ein erstes Bussystem (20) eines ersten Typs und die Gateway-Rechner (201, 202) sowie die Speicherprogrammierbaren Steuerungen (10, 11, 12, 13, 14) an ein zweites Bussystem (30) eines zweiten Typs angeschlossen sind, wodurch die Speicherprogrammierbaren Steuerungen (10, 11, 12, 13, 14) über einen der Gateway-Rechner (201, 202) von den Anwender-Rechnern (100) steuer- und/oder beobachtbar sind, **dadurch gekennzeichnet, daß**
der Gateway-Rechner (201, 202) dazu ausgebildet ist:
- zum Aufbau einer Kommunikationsverbindung zwischen dem Anwender-Rechner (100) und einer oder mehreren der Speicherprogrammierbaren Steuerungen (10, 11, 12, 13, 14) eine an einen virtuellen Gateway-Rechner (200) mit einem virtuellen Kennzeichner für alle Gateway-Rechner (201, 202) des Automatisierungssystems (1) gerichtete Nachricht des Anwender Rechners (100) zu verarbeiten, wobei der Gateway-Rechner (201, 202) eine physikalische Kommunikationsverbindung zu einem ausgewählten der Gateway-Rechner (201, 202) herstellt;
- für die Kommunikationsverbindung Konfigurationsparameter zu erzeugen und zu speichern;
- die Konfigurationsparameter für die Kommunikationsverbindung mit den übrigen Gateway-Rechnern (201, 202) auszutauschen.

12. Automatisierungssystem (1), das einen oder mehrere Anwender-Rechner (100), zumindest zwei Gateway-Rechner (201, 202) und eine Mehrzahl an Speicherprogrammierbaren Steuerungen (10, 11, 12, 13, 14) umfasst, wobei die Anwender-Rechner (100) und die Gateway-Rechner (201, 202) an ein erstes Bussystem (20) eines ersten Typs und die Gateway-Rechner (201, 202) sowie die Speicherprogrammierbaren Steuerungen (10, 11, 12, 13, 14) an ein zweites Bussystem (30) eines zweiten Typs angeschlossen sind, wodurch die Speicherprogrammierbaren Steuerungen (10, 11, 12, 13, 14) über einen der Gateway-Rechner (201, 202) von den Anwender-Rechnern (100) steuer- und beobachtbar sind,
**dadurch gekennzeichnet, dass**
die Gateway-Rechner (201, 202) gemäß dem Anspruch 11 ausgebildet sind.

13. Automatisierungssystem nach Anspruch 12,
**dadurch gekennzeichnet, dass**
das erste Bussystem (20) dazu ausgebildet ist, eine Kommunikation basierend auf dem TCP/IP-Protokoll, insbesondere gemäß dem Standard OPC, durchzuführen.

14. Automatisierungssystem nach Anspruch 12 oder 13,
**dadurch gekennzeichnet, dass**
das zweite Bussystem (30) ein proprietärer Anlagenbus, insbesondere ein Feldbus, ist.

## Claims

1. A method for redundantly operating an automation system (1) comprising one or more user computers (100), at least two gateway computers (201, 202) and a plurality of programmable logic controllers (10, 11, 12, 13, 14), the user computers (100) and the gateway computers (201, 202) being connected to a first bus system (20) of a first type and the gateway computers (201, 202) and the programmable logic controllers (10, 11, 12, 13, 14) being connected to a second bus system (30) of a second type, as a result of which the programmable logic controllers (10, 11, 12, 13, 14) can be controlled and/or monitored by the user computers (100) via one of the gateway computers (201, 202),
**characterized in that**
- in order to set up a communication link between one of the user computers (100) and one or more of the programmable logic controllers (10, 11, 12, 13, 14), the user computer (100) contacts a virtual gateway computer (200) having a virtual identifier for all gateway computers (201, 202) of the automation system (1), which virtual gateway computer establishes a physical communication link to a selected one of the gateway computers (201, 202);
- configuration parameters are generated and stored for the communication link in the selected, active gateway computer (201, 202);
- the configuration parameters for the communication link are interchanged between the active gateway computer (201, 202) and the remaining gateway computers (201, 202).

2. Method according to Claim 1, in which interchange of the configuration data includes changes to the configuration data.

3. Method according to Claim 1 or 2, in which, if the selected gateway computer (201, 202) fails, a new physical communication link is established between the user computer (100) and another one of the gateway computers (201, 202) as the new selected gateway computer (201, 202).

4. Method according to Claim 3, in which the new physical communication link is automatically set up, the configuration parameters for the failed communication link which are stored in the new selected gateway computer (201, 202) being used for the new communication link.

5. Method according to Claim 3 or 4, in which, after the changeover from the failed selected gateway computer (201, 202) to the new selected gateway computer (201, 202), the new selected gateway computer (201, 202) recognizes the changeover from a message from the user computer (100), which message is addressed to the virtual gateway computer (200), activates the communication link and is received from the user computer (100) on account of the interrupted old communication link.

6. Method according to one of Claims 3 to 4, in which the failure of the selected gateway computer (201, 202) is monitored by the other gateway computers (201, 202) by comparing link data relating to the communication link, in which case, when the failure of the selected gateway computer (201, 202) is detected, another of the gateway computers (201, 202), as the new selected gateway computer (201, 202), automatically establishes the new communication link to the user computer (100).

7. Method according to one of the preceding claims, in which all gateway computers (201, 202) are configured in the same manner and provide and manage the same address space.

8. Method according to one of the preceding claims, in which the configuration parameters comprise context objects, in particular for controlling and/or monitoring the programmable logic controllers (10, 11, 12, 13, 14), and optionally certificates.

9. Method according to one of the preceding claims, in which the configuration parameters stored in the gateway computers (201, 202) which have not been selected are not used as long as the selected gateway computer (201, 202) is operating as intended.

10. Method according to one of the preceding claims, in which, in addition to the configuration data, information relating to the programmable logic controllers (10, 11, 12, 13, 14) connected to the virtual gateway computer (201, 202) is interchanged, optionally in a dynamic manner.

11. Gateway computer (201, 202) for redundantly operating an automation system (1) comprising one or more user computers (100), at least two of the gateway computers (201, 202) and a plurality of programmable logic controllers (10, 11, 12, 13, 14), the user computers (100) and the gateway computers (201, 202) being connected to a first bus system (20) of a first type and the gateway computers (201, 202) and the programmable logic controllers (10, 11, 12, 13, 14) being connected to a second bus system (30) of a second type, as a result of which the programmable logic controllers (10, 11, 12, 13, 14) can be controlled and/or monitored by the user computers (100) via one of the gateway computers (201, 202), **characterized in that** the gateway computer (201, 202) is designed:
- to process a message from the user computer (100) addressed to a virtual gateway computer (200) having a virtual identifier for all gateway computers (201, 202) of the automation system (1) in order to set up a communication link between the user computer (100) and one or more of the programmable logic controllers (10, 11, 12, 13, 14), the gateway computer (201, 202) establishing a physical communication link to a selected one of the gateway computers (201, 202);
- to generate and store configuration parameters for the communication link;
- to interchange the configuration parameters for the communication link with the remaining gateway computers (201, 202).

12. Automation system (1) comprising one or more user computers (100), at least two gateway computers (201, 202) and a plurality of programmable logic controllers (10, 11, 12, 13, 14), the user computers (100) and the gateway computers (201, 202) being connected to a first bus system (20) of a first type and the gateway computers (201, 202) and the programmable logic controllers (10, 11, 12, 13, 14) being connected to a second bus system (30) of a second type, as a result of which the programmable logic controllers (10, 11, 12, 13, 14) can be controlled and monitored by the user computers (100) via one of the gateway computers (201, 202),
**characterized in that**
the gateway computers (201, 202) are designed according to Claim 11.

13. Automation system according to Claim 12,
**characterized in that**
the first bus system (20) is designed to carry out communication on the basis of the TCP/IP protocol, in particular according to the OPC standard.

14. Automation system according to Claim 12 or 13,
**characterized in that**
the second bus system (30) is a proprietary installation bus, in particular a field bus.

## Revendications

1. Procédé pour faire fonctionner de manière redondante un système ( 1 ) d'automatisation, qui comprend un ou plusieurs ordinateurs ( 100 ) utilisateurs, au moins deux ordinateurs ( 201, 202 ) gateway et une multiplicité d'automates ( 10, 11, 12, 13, 14 ) programmables, les ordinateurs ( 100 ) utilisateurs et les ordinateurs ( 201, 202 ) gateway étant reliés à un premier système ( 20 ) de bus d'un premier type et les ordinateurs ( 201, 202 ) gateway, ainsi que les automates ( 10, 11, 12, 13, 14 ) programmables étant reliés à un deuxième système ( 30 ) de bus d'un deuxième type, de manière à pouvoir commander et/ou observer les automates ( 10, 11, 12, 13, 14 ) programmables par les ordinateurs ( 100 ) utilisateurs par l'intermédiaire de l'un des ordinateurs ( 201, 202 ) gateway,
**caractérisé en ce que**
- pour l'établissement d'une liaison de communication entre l'un des ordinateurs ( 100 ) utilisateurs et l'un ou plusieurs des automates ( 10, 11, 12, 13, 14 ) programmables, l'ordinateur ( 100 ) utilisateur contacte un ordinateur ( 200 ) gateway virtuel ayant un qualificateur virtuel pour tous les ordinateurs ( 201, 202 ) gateway du système ( 1 ) d'automatisation, lequel produit une liaison physique de communication avec l'un sélectionné des ordinateurs ( 201, 202 ) gateway;
- dans l'ordinateur ( 201, 202 ) gateway actif sélectionné pour la liaison de communication, sont produits et mémorisés des paramètres de configuration;
- les paramètres de configuration pour la liaison de communication sont échangés entre l'ordinateur ( 201, 202 ) gateway actif et les autres ordinateurs ( 201, 202 ) gateway.

2. Procédé suivant la revendication 1, dans lequel des modifications des données de configuration sont englobées par un échange des données de configuration.

3. Procédé suivant la revendication 1 ou 2, dans lequel, si l'ordinateur ( 201, 202 ) gateway sélectionné tombe en panne, une nouvelle liaison physique de communication entre l'ordinateur ( 100 ) utilisateur et un autre des ordinateurs ( 201, 202 ) gateway comme nouvel ordinateur ( 201, 202 ) gateway sélectionné est établie.

4. Procédé suivant la revendication 3, dans lequel l'établissement de la nouvelle liaison physique de communication s'effectue automatiquement, les paramètres de configuration, mémorisés dans le nouvel ordinateur ( 201, 202 ) gateway sélectionné, de la liaison de communication tombée en panne étant utilisés pour la nouvelle liaison de communication.

5. Procédé suivant la revendication 3 ou 4, dans lequel, après le passage de l'ordinateur ( 201, 202 ) gateway sélectionné qui est tombé en panne au nouvel ordinateur ( 201, 202 ) gateway sélectionné, le nouvel ordinateur ( 201, 202 ) gateway sélectionné détecte le passage au moyen d'un message, dirigé vers l'ordinateur ( 201, 202 ) gateway virtuel et activant la liaison de communication, de l'ordinateur ( 100 ) utilisateur, message qui est reçu par l'ordinateur ( 100 ) utilisateur en raison de l'interruption de l'ancienne liaison de communication.

6. Procédé suivant l'une des revendications 3 à 4, dans lequel l'ordinateur ( 201, 202 ) gateway sélectionné tombé en panne est contrôlé par la mise au point de données de la liaison de communication par l'autre ordinateur ( 201, 202 ) gateway, dans lequel, lorsqu'il est détecté que l'ordinateur ( 201, 202 ) gateway sélectionné est tombé en panne, un autre des ordinateurs ( 201, 202 ) gateway établit automatiquement en tant que nouvel ordinateur ( 201, 202 ) gateway sélectionné la nouvelle liaison de communication vers l'ordinateur ( 100 ) utilisateur.

7. Procédé suivant l'une des revendications précédentes, dans lequel tous les ordinateurs ( 201, 202 ) gateway sont configurés de la même façon et mettent à disposition et gèrent le même espace d'adresse.

8. Procédé suivant l'une des revendications précédentes, dans lequel les paramètres de configuration comprennent des objets de contexte, notamment pour la commande et/ou l'observation des automates ( 10, 11, 12, 13, 14 ) programmables, et facultativement des certificats.

9. Procédé suivant l'une des revendications précédentes, dans lequel les paramètres de configuration mémorisés sur les ordinateurs ( 201, 202 ) gateway qui n'ont pas été sélectionnés ne sont pas utilisés tant que l'ordinateur ( 201, 202 ) gateway sélectionné travaille correctement.

10. Procédé suivant l'une des revendications précédentes, dans lequel il s'effectue, en plus des données de configuration, un échange facultativement dynamique d'informations sur les automates ( 10, 11, 12, 13, 14 ) programmables reliés à l'ordinateur ( 201, 202 ) gateway virtuel.

11. Ordinateur ( 201, 202 ) gateway pour le fonctionnement d'une manière redondante d'un système ( 1 ) d'automatisation, qui comprend un ou plusieurs ordinateurs ( 100 ) utilisateurs, au moins deux ordinateurs ( 201, 202 ) gateway et une multiplicité d'automates ( 10, 11, 12, 13, 14 ) programmables, les ordinateurs ( 100 ) utilisateurs et les ordinateurs ( 201, 202 ) gateway étant reliés à un premier système ( 20 ) de bus d'un premier type et les ordinateurs ( 201, 202 ) gateway, ainsi que les automates ( 10, 1, 12, 13, 14 ) programmables étant reliés à un deuxième système ( 30 ) de bus d'un deuxième type, de manière à pouvoir commander et/ou observer les automates ( 10, 11, 12, 13, 14 ) programmables par les ordinateurs ( 100 ) utilisateurs par l'intermédiaire de l'un des ordinateurs ( 201, 202 ) gateway,
**caractérisé en ce que**
l'ordinateur ( 201, 202 ) gateway est constitué :
- pour, afin d'établir une liaison de communication entre l'ordinateur ( 100 ) utilisateur et l'un ou plusieurs des automates ( 10, 11, 12, 13 ) programmables, traiter un message de l'ordinateur ( 100 ) utilisateur envoyé à l'ordinateur ( 100 ) gateway virtuel ayant un qualificatif virtuel pour tous les ordinateurs ( 201, 202 ) gateway du système ( 1 ) d'automatisation, l'ordinateur ( 201, 202 ) gateway produisant une liaison physique de communication vers l'un sélectionné des ordinateurs ( 201, 202 ) gateway;
- pour produire et pour mémoriser des paramètres de configuration pour la liaison de communication;
- pour échanger les paramètres de configuration pour la liaison de communication avec les autres ordinateurs ( 201, 202 ) gateway.

12. Système ( 1 ) d'automatisation, qui comprend un ou plusieurs ordinateurs ( 100 ) utilisateurs, au moins deux ordinateurs ( 201, 202 ) gateway et une multiplicité d'automates ( 10, 11, 12, 13, 14 ) programmables, les ordinateurs ( 100 ) utilisateurs et les ordinateurs ( 201, 202 ) gateway étant reliés à un premier système ( 20 ) de bus d'un premier type et les ordinateurs ( 201, 202 ) gateway, ainsi que les automates ( 10, 11, 12, 13, 14 ) programmables étant reliés à un deuxième système ( 30 ) de bus d'un deuxième type, de manière à pouvoir commander et observer les automates ( 10, 11, 12, 13, 14 ) programmables par les ordinateurs ( 100 ) utilisateurs par l'intermédiaire de l'un des ordinateurs ( 201, 202 ) gateway,
**caractérisé en ce que**
les ordinateurs ( 201, 202 ) gateway sont constitués suivant la revendication 11.

13. Système d'automatisation suivant la revendication 12,
**caractérisé en ce que**
le premier système ( 20 ) de bus est constitué de manière à effectuer une communication sur la base du protocole TCP/IP, notamment suivant la norme OPC.

14. Système d'automatisation suivant la revendication 12 ou 13,
**caractérisé en ce que**
le deuxième système ( 30 ) de bus est un bus d'installation privé, notamment un bus de terrain.
